(19) Europäisches Patentamt
European Patent Office
Office européen des brevets

(11) **EP 2 780 201 B1**

(12) **EUROPÄISCHE PATENTSCHRIFT**

(45) Veröffentlichungstag und Bekanntmachung des Hinweises auf die Patenterteilung:
**13.01.2016   Patentblatt 2016/02**

(21) Anmeldenummer: **12816450.6**

(22) Anmeldetag: **07.11.2012**

(51) Int Cl.:
***B60R 22/40*** *(2006.01)*

(86) Internationale Anmeldenummer:
**PCT/DE2012/200071**

(87) Internationale Veröffentlichungsnummer:
**WO 2013/071928 (23.05.2013 Gazette 2013/21)**

(54) **SENSOR**

SENSOR

CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2011   DE 102011086656**

(43) Veröffentlichungstag der Anmeldung:
**24.09.2014   Patentblatt 2014/39**

(73) Patentinhaber: **Takata AG**
**63743 Aschaffenburg (DE)**

(72) Erfinder:
  • **BAUMGARTNER, Peter**
    **89312 Günzburg (DE)**
  • **HASSE, Hermann**
    **89173 Lonsee (DE)**
  • **LUSTIG, Oswald**
    **89176 Asselfingen (DE)**
  • **BERTRAM, Thomas**
    **89250 Senden (DE)**

(74) Vertreter: **Fischer, Uwe**
**Patentanwalt**
**Moritzstraße 22**
**13597 Berlin (DE)**

(56) Entgegenhaltungen:
**EP-A1- 0 477 918          EP-A1- 0 700 812**
**WO-A1-2008/049181          WO-A1-2011/015318**
**DE-A1- 4 243 101          DE-U1- 8 009 960**
**GB-A- 2 154 853          JP-A- 2003 212 086**

EP 2 780 201 B1

**Beschreibung**

Die Erfindung bezieht sich auf einen Sensor zur Auslösung einer Fahrzeugsicherheitseinrichtung.

Ein Sensor mit den Merkmalen gemäß dem Oberbegriff des Patentanspruchs 1 ist aus der internationalen Patentanmeldung WO 2008/049181 A1 bekannt.

Weitere für eine Fahrzeugsicherheitseinrichtung geeignete Sensoren sind aus den deutschen Offenlegungsschriften DE 10 2008 008 041 und DE 42 43 101 A1 bekannt.

Die Anforderungen an Kraftfahrzeuge bezüglich der innen und außen auftretenden Geräuschemissionen werden immer strenger. Der Erfindung liegt daher die Aufgabe zugrunde, einen Sensor anzugeben, bei dem die auftretende Geräuschemission möglichst gering ist.

Diese Aufgabe wird erfindungsgemäß durch einen Sensor mit den Merkmalen gemäß Patentanspruch 1 gelöst. Vorteilhafte Ausgestaltungen des erfindungsgemäßen Sensors sind in Unteransprüchen angegeben.

Ein wesentlicher Vorteil des erfindungsgemäßen Sensors ist darin zu sehen, dass bei diesem die im Bereich des Trägerelements des Sensors auftretenden Geräusche durch das weichere Material des Gehäuseteils gedämpft werden, so dass der Sensor außen insgesamt deutlich weniger Schall erzeugt als dies der Fall wäre, wenn das Trägerelement und das Gehäuseteil aus gleichhartem Material bestünden.

Das Gehäuseteil besteht vorzugsweise aus einem Elastomer oder aus einem weichen Kunststoff.

Der Sensor ist vorzugsweise geeignet, zwischen einer Trägereinrichtung und einem Abdeckelement (z. B in Form einer Abdeckkappe) derart eingesetzt zu werden, dass das Trägerelement von der Trägereinrichtung und dem Abdeckelement getrennt bleibt.

Gemäß einer bevorzugten Ausgestaltung ist vorgesehen, dass das Gehäuseteil eine Gehäuserückwand aufweist.

Zumindest ein Schnappelement ermöglicht vorzugsweise ein Verschnappen der Gehäuserückwand in einer Durchgangsöffnung einer Trägereinrichtung; ein solches Schnappelement kann die Montage erleichtern. Die Trägereinrichtung kann beispielsweise eine Platte umfassen.

Das Schnappelement hintergreift nach einer Montage der Gehäuserückwand in der Durchgangsöffnung der Trägereinrichtung vorzugsweise die Ebene der Durchgangsöffnung.

Darüber hinaus wird es als vorteilhaft angesehen, wenn die Gehäuserückwand des Gehäuseteils einen ringförmigen Anschlagsabschnitt aufweist, der bei einer Montage der Gehäuserückwand an der Durchgangsöffnung der Trägereinrichtung auf der dem Trägerelement des Sensors zugewandten Seite der Trägereinrichtung anliegt.

Die Form des ringförmigen Anschlagsabschnitts ist beliebig, sie kann kreisrund, oval, oder auch eckig sein. Vorzugsweise ist die Form an die Kontur der Durchgangsöffnung der Trägereinrichtung angepasst, beispielsweise derart, dass das Gehäuseteil in der Durchgangsöffnung der Trägereinrichtung klemmend gehalten wird.

Der ringförmige Anschlagsabschnitt kann beispielsweise durch das oder die Schnappelemente unterbrochen sein.

Die Gehäuserückwand weist vorzugsweise einen Innenbereich auf, der sich nach einer Montage der Gehäuserückwand an der Durchgangsöffnung der Trägereinrichtung auf der dem Trägerelement des Sensors zugewandten Seite der Trägereinrichtung, auf der dem Trägerelement des Sensors abgewandten Seite der Trägereinrichtung oder dazwischen befindet. Besonders bevorzugt befindet sich der Innenbereich auf der dem Trägerelement des Sensors abgewandten Seite der Trägereinrichtung.

Der Innenbereich der Gehäuserückwand und der ringförmige Anschlagsabschnitt sind bevorzugt durch einen Verbindungsabschnitt verbunden, der die Ebene der Durchgangsöffnung durchsetzt. Vorzugsweise weist der Verbindungsabschnitt eine zumindest abschnittsweise gewölbte Oberfläche auf.

Die Ringform des im Querschnitt ringförmigen Verbindungsabschnitts ist beliebig, sie sollte lediglich mit der Kontur des ringförmigen Anschlagsabschnitts und/oder mit der Kontur der Durchgangsöffnung der Trägereinrichtung korrelieren.

Der ringförmige Verbindungsabschnitt und/oder der Anschlagsabschnitt bilden vorzugsweise einen Dichtring - gegen Schall und Staub - zwischen Abdeckung und Rahmen.

Darüber hinaus wird es als vorteilhaft angesehen, wenn die zwei parallel verlaufenden Schienenabschnitte senkrecht, schräg oder parallel zur Gehäuserückwand ausgerichtet sind.

Das Gehäuseteil ist vorzugsweise einteilig, und die zwei parallel verlaufenden Schienenabschnitte sind vorzugsweise einteilig an die Gehäuserückwand angeformt. Somit bestehen also auch die Schienenabschnitte vorzugsweise aus einem weichen Kunststoffmaterial oder einem Elastomer.

Der Sensor ist vorzugsweise zur Auslösung eines Fahrzeuginsassenrückhaltesystems, insbesondere eines Gurtaufrollers, geeignet.

Der Sensor kann beispielsweise einen Trägheitskörper aufweisen, der bei einer Bewegung des Sensors relativ zu dem Trägerelement auslenkbar ist. Das Trägerelement kann mit dem Trägheitskörper mittelbar oder unmittelbar in mechanischem Kontakt stehen: Beispielsweise kann der Trägheitskörper auf dem Trägerelement aufliegen oder von diesem gehalten werden. So kann der Sensor beispielsweise mit einer unteren Rollfläche ausgestattet sein, auf der der Trägheitskörper rollen kann. Alternativ kann der Sensor mit einem Pendelgelenk ausgestattet sein, das ein Pendeln des Trägheitskörpers relativ zum Trägerelement ermöglicht. Auch ist es möglich, den Sensor mit einem so genannten "Standing Man" (stehender Mann) auszustatten; dabei handelt es sich um einen stehenden Trägheitskörper, der im Falle einer Beschleunigung trägheitsbedingt eine Kippbewegung ausführen kann.

Die Erfindung bezieht sich darüber hinaus auf eine Fahrzeugsicherheitseinrichtung mit einem Sensor. Erfindungsgemäß ist vorgesehen, dass die Fahrzeugsicherheitseinrichtung eine Trägereinrichtung und ein Abdeckelement aufweist, das Trägerelement des Sensors zwischen der Trägereinrichtung und dem Abdeckelement angeordnet ist und das Trägerelement des Sensors durch das Gehäuseteil des Sensors von der Trägereinrichtung getrennt ist.

Bezüglich der Vorteile der erfindungsgemäßen Fahrzeugsicherheitseinrichtung sei auf die obigen Ausführungen im Zusammenhang mit dem erfindungsgemäßen Sensor verwiesen, da die Vorteile des erfindungsgemäßen Sensors denen der erfindungsgemäßen Sicherheitseinrichtung im Wesentlichen entsprechen.

Die Trägereinrichtung der Fahrzeugsicherheitseinrichtung kann beispielsweise einen Bestandteil eines Rahmens der Fahrzeugsicherheitseinrichtung bilden.

Das Abdeckelement ist vorzugsweise kappenförmig und/oder durch eine Abdeckkappe gebildet.

Das Trägerelement des Sensors ist durch das Gehäuseteil vorzugsweise nicht nur von der Trägereinrichtung sondern auch von dem Abdeckelement getrennt.

Darüber hinaus wird es als vorteilhaft angesehen, wenn die Trägereinrichtung eine Durchgangsöffnung aufweist. Das Gehäuseteil weist vorzugsweise eine Gehäuserückwand und zumindest ein Schnappelement auf, das die Gehäuserückwand in der Durchgangsöffnung der Trägereinrichtung verschnappt. Wie bereits erwähnt, kann ein Schnappelement die Montage erleichtern. Die Gehäuserückwand des Gehäuseteils weist bevorzugt einen ringförmigen Anschlagsabschnitt auf, der im Bereich der Durchgangsöffnung der Trägereinrichtung auf der dem Trägerelement des Sensors zugewandten Seite der Trägereinrichtung anliegt. Das Schnappelement liegt bevorzugt auf der dem Trägerelement des Sensors abgewandten Seite der Trägereinrichtung an und bewirkt vorzugsweise gemeinsam mit dem ringförmigen Anschlagsabschnitt eine formschlüssige Verbindung zwischen der Gehäuserückwand des Gehäuseteils und der Trägereinrichtung. Außerdem dämpft der ringförmige Anschlagsabschnitt die Geräuschübertragung von der Abdeckung zum Rahmen und/oder umgekehrt.

Das Gehäuseteil durchsetzt vorzugsweise die Ebene der Durchgangsöffnung der Trägereinrichtung und weist bevorzugt einen Innenbereich auf, der sich auf der dem Trägerelement des Sensors abgewandten Seite der Trägereinrichtung befindet Der Innenbereich der Gehäuserückwand und der ringförmige Anschlagsabschnitt sind vorzugsweise durch einen die Durchgangsöffnung der Trägereinrichtung durchsetzenden Verbindungsabschnitt verbunden.

Der Verbindungsabschnitt ist vorzugsweise ringförmig und weist bevorzugt zumindest abschnittsweise eine gewölbte Oberfläche auf.

Das Gehäuseteil weist vorzugsweise zwei parallel verlaufende Schienenabschnitte auf, die senkrecht, schräg (z. B. in einem Winkel zwischen 0 und 10 Grad) oder parallel zur Gehäuserückwand ausgerichtet sind. Das Trägerelement des Sensors ist bevorzugt zwischen den zwei parallel verlaufenden Schienenabschnitten eingesteckt.

Falls der Sensor als Trägheitskörper eine Sensorkugel aufweist, die auf einer unteren Rollfläche rollen kann, so wird es als vorteilhaft angesehen, wenn die untere Rollfläche eine Bohrung (vorzugsweise in der Mitte der unteren Rollfläche) aufweist und die Sensorkugel in bzw. auf der Bohrung gelagert wird. Die angrenzende Geometrie der Rollfläche ist vorzugsweise so gestaltet, dass die Sensorkugel an ihrer Bewegung nicht gehindert wird, bis sie die Bohrung verlassen hat. Somit wird durch den Bohrungsdurchmesser gesteuert, bei welcher Beschleunigung bzw. Neigung die Kugel in Bewegung gesetzt und dadurch der Sensor ausgelöst sowie, beispielsweise ein Gurtaufroller, verriegelt wird.

Eine Durchmesseränderung der Bohrung (beispielsweise im Rahmen von Fertigungstoleranzen) hat einen wesentlich kleineren Einfluss auf die Kugelbewegung und damit auf die Sensitivität des Sensors als eine Konuswinkeländerung; der Konuswinkel beschreibt dabei den Öffnungswinkel der Konusfläche, die die Bohrung umgibt und auf der die Sensorkugel rollt, sobald sie die Bohrung verlassen hat. Nach Verlassen der Bohrung läuft die Kugel auf der Konusfläche, um die Ver- und Entriegelungsfunktionen erfüllen zu können.

Durch das Vorsehen einer Bohrung kann der Sensor noch genauer eingestellt und mit größeren Toleranzen gefertigt werden als dies ohne eine solche Bohrung möglich wäre.

Zur Festlegung der Sensorsensitivität kann somit in vorteilhafter Weise das Verhältnis zwischen Kugeldurchmesser und Bohrungsdurchmesser sowie zwischen Bohrungsdurchmesser und Konuswinkel eingestellt werden. Vorzugsweise ist der dem Bohrungsdurchmesser entsprechende kugelbezogene Öffnungswinkel $\beta$ (bezogen auf die Mitte der Sensorkugel) größer als der die Konusfläche definierende Konuswinkel $\alpha$; es gilt also vorzugsweise:

$$\beta > \alpha$$

Der Konuswinkel $\alpha$ ist vorzugsweise mindestens so groß wie der für den Sensor vorgegebene Entriegelungswinkel im Falle einer Neigung des Sensors.

Durch die zusätzliche Bohrung lässt sich der Funktionsbereich des Sensors also besonders leicht einstellen. Es kann mit größeren Toleranzen als ohne Bohrung gefertigt werden, und die Herstellbarkeit und die Qualitätssicherung werden vereinfacht. Außerdem haben Geräuschmessungen mit unterschiedlichen Streckenprofilen gezeigt, dass durch die Bohrung die Fahrzeugsensorkugel früher in Rotationsbewegung gebracht werden kann, was zu einer Geräuschreduzierung des Sensors führt.

Die Erfindung wird nachfolgend anhand von Ausführungsbeispielen näher erläutert; dabei zeigen beispielhaft

Figur 1 ein Ausführungsbeispiel für eine erfindungsgemäße Fahrzeugsicherheitseinrichtung, die mit einem Ausführungsbeispiel für einen erfindungsgemäßen Sensor versehen ist, wobei die Figur 1 die Fahrzeugsicherheitseinrichtung in einer Explosionsdarstellung zeigt,

Figur 2 den an einem Rahmen der Fahrzeugsicherheitseinrichtung montierten Sensor in einer dreidimensionalen Sicht von der Seite,

Figur 3 den an dem Rahmen der Fahrzeugsicherheitseinrichtung montierten Sensor in einer Sicht von der Seite im Querschnitt,

Figur 4 ein Ausführungsbeispiel für ein Gehäuseteil für den Sensor gemäß Figur 1,

Figur 5 beispielhaft die Montage des Gehäuseteils gemäß Figur 4 nach einer Montage in einer Durchgangsöffnung einer Platte eines Rahmens der Fahrzeugsicherheitseinrichtung im Querschnitt gemäß Figur 1,

Figur 6 eine Gehäuserückwand des Gehäuseteils gemäß Figur 4 nach einer Montage in einer Durchgangsöffnung einer Platte,

Figur 7 ein zweites Ausführungsbeispiel für einen Sensor für die Fahrzeugsicherheitseinrichtung gemäß Figur 1 und

Figur 8 eine untere Rollfläche des Sensors näher im Detail.

In den Figuren werden der Übersicht halber für identische oder vergleichbare Komponenten stets dieselben Bezugszeichen verwendet.

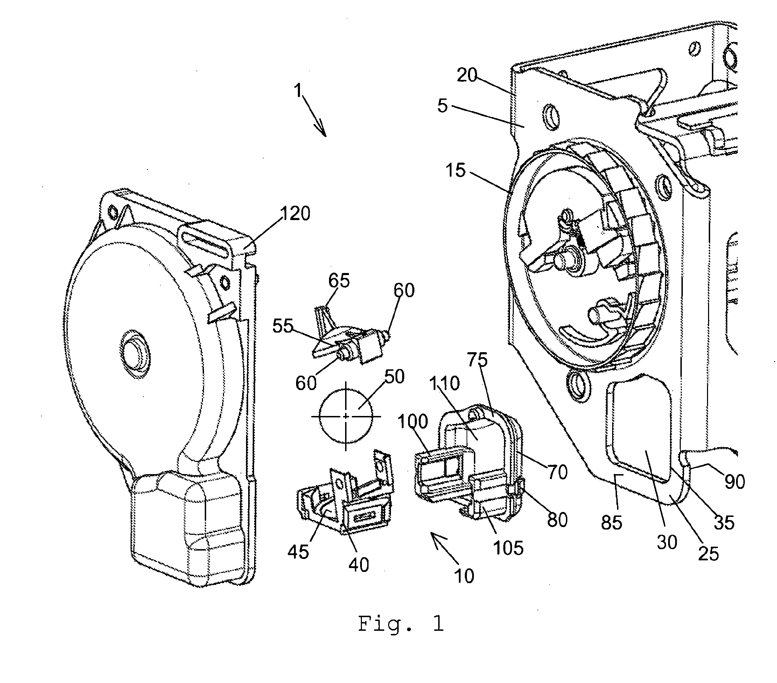

Die Figur 1 zeigt ein Ausführungsbeispiel für eine Fahrzeugsicherheitseinrichtung 1, die mit einem Gurtaufroller 5 sowie einem Sensor 10 ausgestattet ist. Der Gurtaufroller 5 umfasst ein Sperrrad 15, das drehfest mit einer in der Figur 1 nicht gezeigten Gurtspule des Gurtaufrollers 5 in Verbindung steht. Das Sperrrad 15 kann von dem Sensor 10 gesperrt werden, so dass eine Rotation des Sperrrades 15 und damit eine Rotation der Gurtspule des Gurtaufrollers 5 unterbunden wird, wenn der Sensor 10 ausgelöst ist, beispielsweise im Falle einer abrupten Änderung der Fahrzeuggeschwindigkeit.
In der Figur 1 erkennt man darüber hinaus einen Rahmen 20 des Gurtaufrollers 5, der eine Platte 25 mit einer Durchgangsöffnung 30 aufweist. Die Platte 25 mit der Durchgangsöffnung 30 bildet eine Trägereinrichtung 35 zum Befestigen des Sensors 10.
Der Sensor 10 umfasst ein Trägerelement 40, das mit einer unteren Rollfläche 45 ausgestattet ist. Auf der unteren Rollfläche 45 liegt ein Trägheitskörper 50 rollbar auf, bei dem es sich beispielsweise um eine Kugel handeln kann. Auf dem Trägheitskörper 50 liegt ein Sensorglied 55 auf, das durch Bolzen 60 schwenkbar an dem Trägerelement 40 gelagert ist.
Das Sensorglied 55 ist mit einem Sperrabschnitt 65 verbunden, der je nach dem Schwenkwinkel des Sensorgliedes 55 in das Sperrrad 15 eingreifen und eine Rotationsbewegung des Sperrrades 15 verhindern kann. Der Schwenkwinkel des Sensorgliedes 55 relativ zu dem Trägerelement 40 hängt von der jeweiligen Position des Trägheitskörpers 50 ab, der auf der unteren Rollfläche 45 rollen kann, wenn der Sensor 10 bzw. der Gurtaufroller 5 abrupt bewegt werden.
Zur Befestigung des Sensors 10 an der Trägereinrichtung 35 bzw. in der Durchgangsöffnung 30 der Platte 25 ist der Sensor 10 mit einem Gehäuseteil 70 ausgestattet, das unter anderem einen ringförmigen Anschlagsabschnitt 75 sowie Schnappelemente 80 umfasst. Das Gehäuseteil 70 kann in die Durchgangsöffnung 30 der Platte 25 derart eingesetzt werden, dass der ringförmige Anschlagsabschnitt 75 auf der dem Trägerelement 40 zugewandten Seite 85 der Platte 25 aufliegt.
Der oder die Schnappelemente 80 durchgreifen die Durchgangsöffnung 30 und schnappen auf der dem Trägerelement 40 abgewandten Seite 90 der Platte 25 ein und führen über einen Hinterschnitt zu einer formschlüssigen Verbindung des Gehäuseteils 70 an der Platte 25.
Zur Befestigung des Trägerelements 40 an dem Gehäuseteil 70 weist das Gehäuseteil 70 zwei Schienenabschnitte 100 und 105 auf, die parallel zueinander angeordnet sind und sich zumindest näherungsweise senkrecht von der Gehäuserückwand 110 weg erstrecken. Die beiden Schienenabschnitte 100 und 105 sind derart ausgeformt, dass das Trägerelement 40 zwischen den beiden Schienenabschnitten 100 und 105 entlang der Längsachse der Schienenabschnitte eingeschoben werden kann und von den beiden Schienenabschnitten gehalten wird.
Nach dem Einsetzen des Sensors 10 in die Durchgangsöffnung 30 können der Sensor 10 sowie auch das Sperrrad 15 mittels eines Abdeckelements 120 abgedeckt werden, das auf die Platte 25 bzw. den Rahmen 20 des Gurtaufrollers 5 aufgesetzt wird.
Bei dem Ausführungsbeispiel gemäß Figur 1 besteht das Gehäuseteil 70 aus einem weicheren Material als das Trägerelement 40, so dass eine Geräuschdämmung durch das Gehäuseteil 70 erreicht wird.

Kommt es beispielsweise zu einer Geräuschentwicklung aufgrund der Rollbewegung des Trägheitskörpers 50 auf der unteren Rollfläche 45, so werden sowohl der entstehende Körperschall als auch der entstehende Luftschall durch das weichere Gehäuseteil 70 gedämmt: Zum einen wird nämlich aufgrund der unterschiedlichen Materialhärte vermieden, dass der Körperschall über das Gehäuseteil 70 auf den Rahmen 20 und damit den Gurtaufroller 5 insgesamt überkoppeln kann; zum anderen wird durch die Gehäuserückwand 110 vermieden, dass der entstehende Luftschall durch die Durchgangsöffnung 30 hindurch den Gurtaufroller 5 verlassen kann.

Das Gehäuseteil 70 kann beispielsweise aus einem Elastomer (z. B. Weichplastik) bestehen. Das Trägerelement 40 kann beispielsweise aus einem demgegenüber härterem Plastik (z. B. Hartplastik), aus Metall oder aus mit Kunststoff umspritzten Metall bestehen.

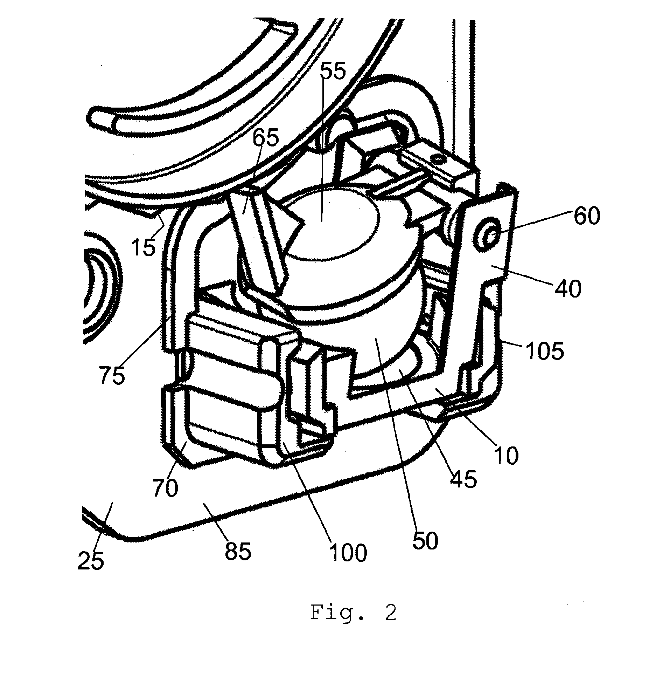

Die Figur 2 zeigt den Sensor 10 nach einem Einsetzen des Gehäuseteils 70 in der Durchgangsöffnung der Platte 25 näher im Detail. Es lässt sich erkennen, dass der ringförmige Anschlagsabschnitt 75 an der Seite 85 der Platte 25 anliegt. Darüber hinaus lassen sich die beiden parallel angeordneten Schienenabschnitte 100 und 105 gut erkennen, zwischen denen das Trägerelement 40 eingeklemmt ist.

Die Figur 2 zeigt außerdem die Funktionsweise des Sensorgliedes 55 näher im Detail, das über den Bolzen 60 schwenkbar am Trägerelement 40 gelagert ist. So lässt sich erkennen, dass der Sperrabschnitt 65 in das Sperrrad 15 des Gurtaufrollers einsteuern kann, wenn der Trägheitskörper 50 auf der unteren Rollfläche 45 trägheitsbedingt rollt.

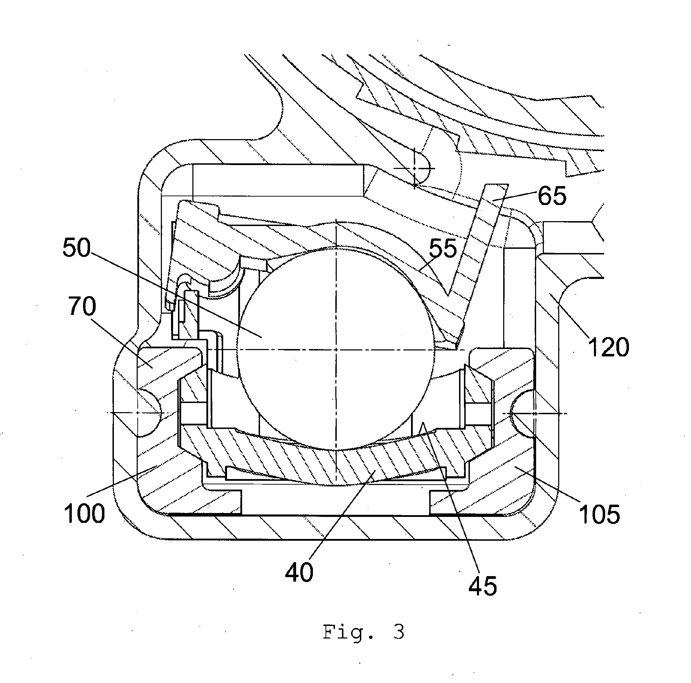

Die Figur 3 zeigt den an dem Abdeckelement 120 montierten Sensor nochmals in einem Querschnitt. Es lassen sich das Trägerelement 40 mit der unteren Rollfläche 45, der darauf befindliche Trägheitskörper 50 sowie das Sensorglied 55 mit dem Sperrabschnitt 65 gut erkennen.

Darüber hinaus zeigt die Figur 3, wie das Trägerelement 40 zwischen den beiden Schienenabschnitten 100 und 105 des Gehäuseteils 70 gehalten wird.

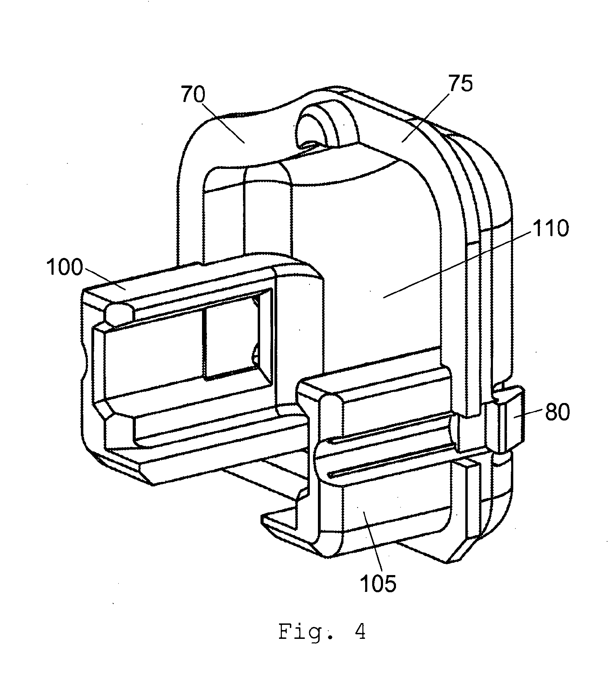

Die Figur 4 zeigt die Ausgestaltung des Gehäuseteils 70 näher im Detail. Man erkennt ein Schnappelement 80, das ein formschlüssiges Befestigen des Gehäuseteils 70 in der Durchgangsöffnung 30 der Platte 25 (vgl. Figur 1) ermöglicht. Darüber hinaus ist die Formgestaltung des ringförmigen Anschlagsabschnitts 75 erkennbar, der ebenfalls zur Befestigung des Gehäuseteils 70 dient. Auch zeigt die Figur 4 die beiden Schienenabschnitte 100 und 105, die senkrecht (zumindest näherungsweise senkrecht) auf der Gehäuserückwand 110 stehen und zwischen denen das Trägerelement 40 (vgl. Figur 1) eingeschoben werden kann, wodurch es zu einer Befestigung des Trägerelements 40 an dem Gehäuseteil 70 kommt.

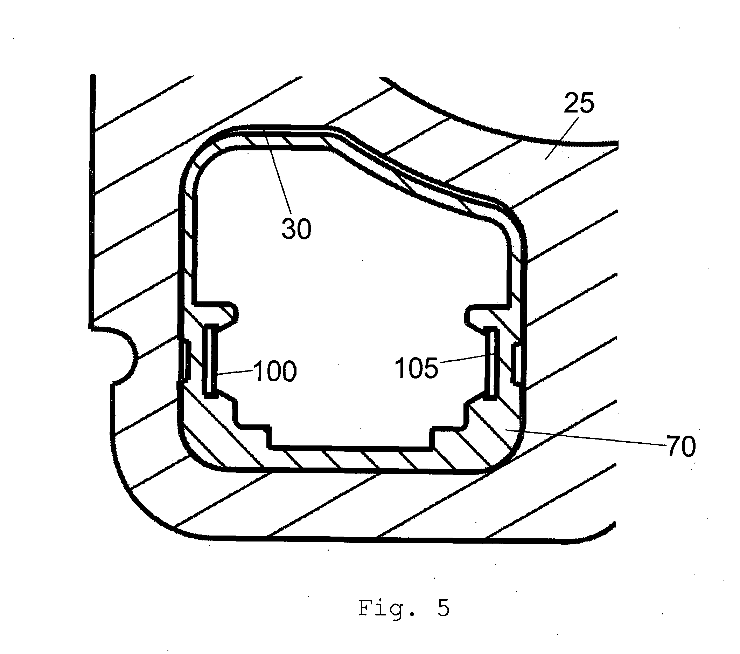

Die Figur 5 zeigt das Gehäuseteil 70 in einem Querschnitt, nachdem es in der Durchgangsöffnung 30 der Platte 25 eingesetzt worden ist. Es lassen sich die beiden Schienenabschnitte 100 und 105 erkennen, die zur Befestigung des Trägerelements (40) dienen. In der Figur 5 kann man auch erkennen, dass das Gehäuseteil (70) den Sensor (10) vom Rahmen (20) vollständig isoliert.

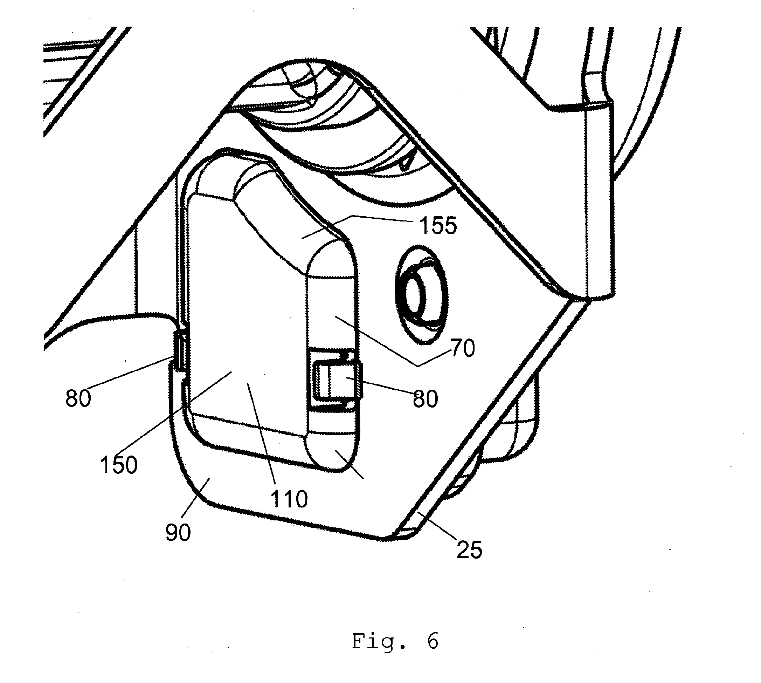

Die Figur 6 zeigt die Befestigung des Gehäuseteils 70 an der Durchgangsöffnung 30 der Platte 25 in einer anderen Sicht; es lässt sich die Seite 90 der Platte 25 erkennen, die dem Trägerelement des Sensors abgewandt ist. Man erkennt zwei Schnappelemente 80, mit denen das Gehäuseteil 70 in der Durchgangsöffnung 30 verschnappt ist. Darüber hinaus lässt sich die Ausformung der Gehäuserückwand 110 näher erkennen. So sieht man, dass die Gehäuserückwand 110 einen Innenbereich 150 aufweist, der nach der Montage der Gehäuserückwand 110 auf der Seite 90 der Platte 25 liegt. Der Innenbereich 150 der Gehäuserückwand 110 steht mit einem Verbindungsabschnitt 155 in Verbindung, der den Innenbereich 150 ringförmig umgibt und gewölbt ist. Der Verbindungsabschnitt 155 stellt eine Verbindung zwischen dem Innenbereich 150 der Gehäuserückwand 110 und dem ringförmigen Anschlagsabschnitt 75 (vgl. Figur 1) her.

Durch die Formgestaltung des ringförmigen, gewölbten Verbindungsabschnitts 155 wird in vorteilhafter Weise eine federnde Verbindung zwischen dem Gehäuseteil 70 und der Platte 25 gebildet, so dass eine besonders effektive Körperschalldämpfung erreicht wird.

Der Innenbereich 150 der Gehäuserückwand 110 führt in vorteilhafter Weise zu einer effektiven Dämmung der Schallwellen, die von dem Trägheitskörper 50 des Sensors 10 erzeugt werden.

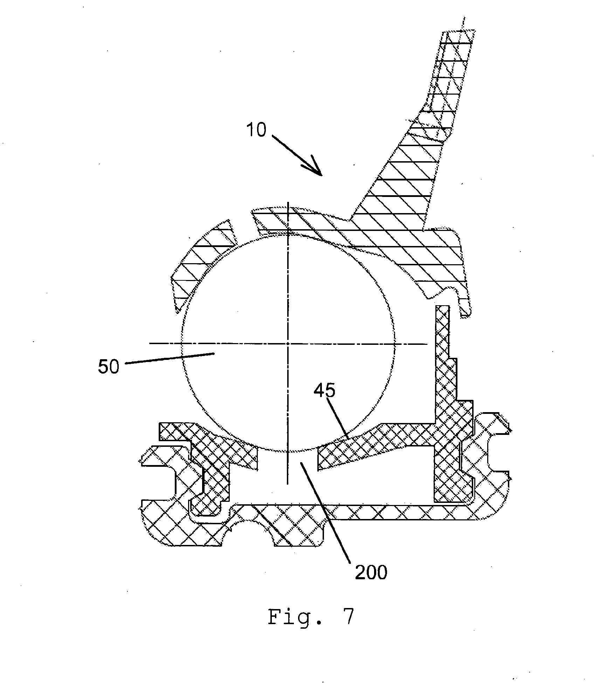

Die Figur 7 zeigt ein weiteres Ausführungsbeispiel für einen Sensor 10 für die Fahrzeugsicherheitseinrichtung 1, wie sie in der Figur 1 gezeigt ist. Man sieht, dass die untere Rollfläche 45 eine Bohrung 200 aufweist, auf der der vorzugsweise kugelförmige Trägheitskörper 50 aufliegt.

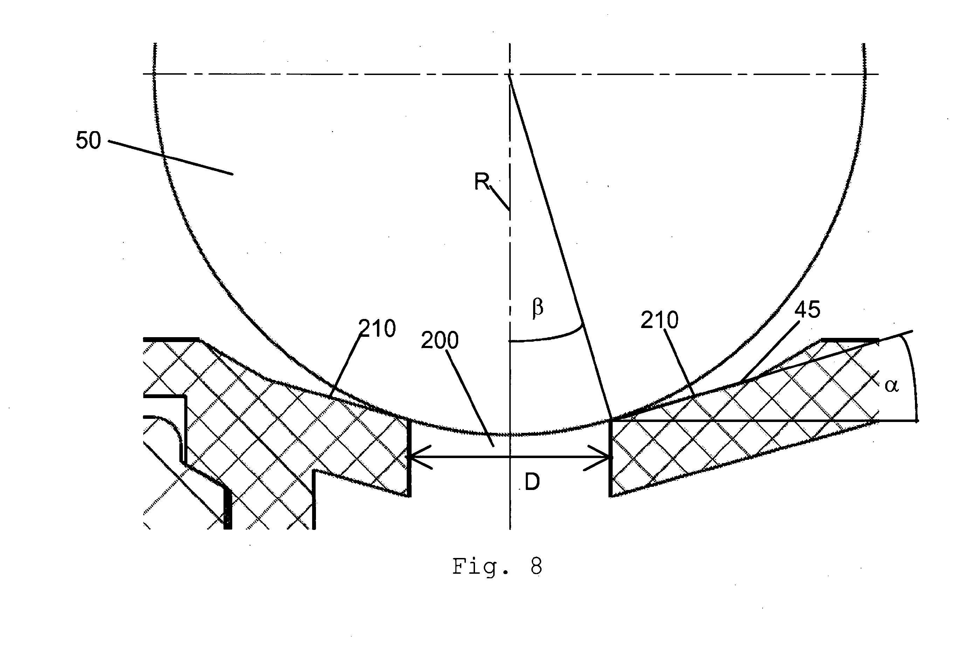

Die Figur 8 zeigt die untere Rollfläche 45 und die Bohrung 200 näher im Detail. Es lässt sich erkennen, dass die Bohrung 200 von einer konusförmig nach innen in Richtung Bohrung (200) laufende Fläche, nachfolgend Konusfläche 210 genannt, umgeben wird. Der Winkel $\alpha$ zwischen der Konusfläche 210 und der Horizontalen H (bei horizontal ausgerichtetem Sensor) ist vorzugsweise kleiner als der kugelbezogene Öffnungswinkel $\beta$ der Bohrung 200. Der Öffnungswinkel $\beta$ der Bohrung 200 berechnet sich näherungsweise wie folgt:

$$\beta = D/(2*R),$$

wobei D den Durchmesser der Bohrung 200 und R den Radius des kugelförmigen Trägheitskörpers 50 bezeichnet.

Der Winkel $\alpha$ ist vorzugsweise größer als 14° und beträgt beispielsweise 16°.

Bezugszeichenliste

1    Fahrzeugsicherheitseinrichtung
5    Gurtaufroller
10   Sensor
15   Sperrrad
20   Rahmen
25   Platte
30   Durchgangsöffnung
35   Trägereinrichtung
40   Trägerelement
45   untere Rollfläche
50   Trägheitskörper
55   Sensorglied
60   Bolzen
65   Sperrabschnitt
70   Gehäuseteil
75   Anschlagsabschnitt
80   Schnappelement
85   dem Trägerelement zugewandte Seite
90   dem Trägerelement abgewandte Seite
100  Schienenabschnitt
105  Schienenabschnitt
110  Gehäuserückwand
120  Abdeckelement
150  Innenbereich
155  Verbindungsabschnitt
200  Bohrung
210  Konusfläche
H    Horizontale
α    Winkel
β    Winkel

**Patentansprüche**

1. Sensor (10) zur Auslösung einer Fahrzeugsicherheitseinrichtung (1),
   wobei

   - der Sensor (10) ein Trägerelement (40) und ein Gehäuseteil (70) aufweist, das das Trägerelement (40) hält,
   **dadurch gekennzeichnet, dass**
   - das Gehäuseteil (70) aus einem weicheren Material als das Trägerelement (40) besteht,
   - das Gehäuseteil (70) zwei parallel verlaufende Schienenabschnitte (100, 105) aufweist, und
   - das Trägerelement (40) des Sensors (10) zwischen den zwei parallel verlaufenden Schienenabschnitten (100, 105) eingesteckt oder eingeschoben ist und von diesen gehalten wird.

2. Sensor nach Anspruch 1,
   **dadurch gekennzeichnet, dass**
   das Gehäuseteil (70) eine Gehäuserückwand (110) und zumindest ein Schnappelement (80) aufweist, das ein Verschnappen der Gehäuserückwand (110) in einer Durchgangsöffnung (30) einer Trägereinrichtung (35) ermöglicht.

3. Sensor nach einem der voranstehenden Ansprüche,
   **dadurch gekennzeichnet, dass**
   die Gehäuserückwand (110) des Gehäuseteils (70) einen ringförmigen Anschlagsabschnitt (75) aufweist, der bei einer Montage der Gehäuserückwand (110) an der Durchgangsöffnung (30) der Trägereinrichtung (35) auf der dem Trägerelement (40) des Sensors (10) zugewandten Seite (85) der Trägereinrichtung (35) anliegt.

4. Sensor nach einem der voranstehenden Ansprüche,
   **dadurch gekennzeichnet, dass**
   die Gehäuserückwand (110) einen Innenbereich (150) aufweist, der sich nach einer Montage der Gehäuserückwand (110) an der Durchgangsöffnung (30) der Trägereinrichtung (35) auf der dem Trägerelement (40) des Sensors (10) abgewandten Seite (90) der Trägereinrichtung (35) befindet.

5. Sensor nach einem der voranstehenden Ansprüche,
   **dadurch gekennzeichnet, dass**

   - der Sensor einen Trägheitskörper (50) aufweist, der relativ zum Trägerelement (40) auslenkbar ist.

6. Fahrzeugsicherheitseinrichtung (1) mit einem Sensor (10) nach einem der voranstehenden Ansprüche,
   **dadurch gekennzeichnet, dass**

   - die Fahrzeugsicherheitseinrichtung (1) eine Trägereinrichtung (35) und ein Abdeckelement (120) aufweist,
   - das Trägerelement (40) des Sensors (10) zwischen der Trägereinrichtung (35) und dem Abdeckelement (120) angeordnet ist und
   - das Trägerelement (40) des Sensors (10) durch das Gehäuseteil (70) des Sensors (10) von der Trägereinrichtung (35) und/oder der Abdeckung (120) getrennt ist.

7. Fahrzeugsicherheitseinrichtung nach Anspruch 6,
   **dadurch gekennzeichnet, dass**

   - die Trägereinrichtung (35) eine Durchgangsöffnung (30) aufweist und
   - das Gehäuseteil (70) eine Gehäuserückwand (110) und zumindest ein Schnappelement (80) aufweist, das die Gehäuserückwand (110) in der Durchgangsöffnung (30) der Trägereinrichtung (35) verschnappt.

8. Fahrzeugsicherheitseinrichtung nach einem der voranstehenden Ansprüche 6-7, **dadurch gekennzeichnet, dass**

- die Gehäuserückwand (110) des Gehäuseteils (70) einen ringförmigen Anschlagabschnitt (75) aufweist, der im Bereich der Durchgangsöffnung (30) der Trägereinrichtung (35) auf der dem Trägerelement (40) des Sensors (10) zugewandten Seite (85) der Trägereinrichtung (35) anliegt, und
- das Schnappelement (80) auf der dem Trägerelement (40) des Sensors (10) abgewandten Seite (90) der Trägereinrichtung (35) anliegt und gemeinsam mit dem ringförmigen Anschlagabschnitt (75) eine formschlüssige Verbindung zwischen der Gehäuserückwand (110) des Gehäuseteils (70) und der Trägereinrichtung (35) bewirkt.

9. Fahrzeugsicherheitseinrichtung nach einem der voranstehenden Ansprüche 6-8, **dadurch gekennzeichnet, dass**

- das Gehäuseteil (70) die Ebene der Durchgangsöffnung (30) der Trägereinrichtung (35) durchsetzt und einen Innenbereich (150) aufweist, der sich auf der dem Trägerelement (40) des Sensors (10) abgewandten Seite (90) der Trägereinrichtung (35) befindet, und
- der Innenbereich (150) der Gehäuserückwand (110) und der ringförmige Anschlagabschnitt (75) durch einen die Durchgangsöffnung (30) der Trägereinrichtung (35) durchsetzenden Verbindungsabschnitt (155) verbunden sind.

10. Fahrzeugsicherheitseinrichtung nach einem der voranstehenden Ansprüche 6-9, **dadurch gekennzeichnet, dass**

- das Gehäuseteil (70) zwei parallel verlaufende Schienenabschnitte (100, 105) aufweist, und
- das Trägerelement (40) des Sensors (10) zwischen den zwei parallel verlaufenden Schienenabschnitten (100, 105) eingesteckt ist.

**Claims**

1. Sensor (10) for tripping a vehicle safety device (1), wherein

- the sensor (10) has a carrier element (40) and a housing part (70) which holds the carrier element (40), **characterized in that**
- the housing part (70) is composed of a softer material than the carrier element (40),
- the housing part (70) has two parallel rail sections (100, 105), and
- the carrier element (40) of the sensor (10) is inserted or pushed between the two parallel rail sections (100, 105) and is held by the said rail sections.

2. Sensor according to Claim 1, **characterized in that** the housing part (70) has a housing rear wall (110) and at least one snap-action element (80) which allows the housing rear wall (110) to snap into a passage opening (30) in a carrier device (35).

3. Sensor according to either of the preceding claims, **characterized in that** the housing rear wall (110) of the housing part (70) has an annular stop section (75) which, during fitting of the housing rear wall (110) to the passage opening (30) in the carrier device (35), bears on that side (85) of the carrier device (35) which faces the carrier element (40) of the sensor (10).

4. Sensor according to one of the preceding claims, **characterized in that** the housing rear wall (110) has an inner region (150) which, after fitting of the housing rear wall (110) to the passage opening (30) in the carrier device (35), is located on that side (90) of the carrier device (35) which is averted from the carrier element (40) of the sensor (10).

5. Sensor according to one of the preceding claims, **characterized in that**

- the sensor has an inertia body (50) which can be deflected relative to the carrier element (40).

6. Vehicle safety device (1) having a sensor (10) according to one of the preceding claims, **characterized in that**

- the vehicle safety device (1) has a carrier device (35) and a covering element (120),
- the carrier element (40) of the sensor (10) is arranged between the carrier device (35) and the covering element (120), and
- the carrier element (40) of the sensor (10) is separated from the carrier device (35) and/or the cover (120) by the housing part (70) of the sensor (10).

7. Vehicle safety device according to Claim 6, **characterized in that**

- the carrier device (35) has a passage opening (30), and
- the housing part (70) has a housing rear wall (110) and at least one snap-action element (80) which snaps the housing rear wall (110) into the passage opening (30) in the carrier device (35).

**8.** Vehicle safety device according to either of preceding Claims 6 and 7,
**characterized in that**

- the housing rear wall (110) of the housing part (70) has an annular stop section (75) which, in the region of the passage opening (30) in the carrier device (35), bears on that side (85) of the carrier device (35) which faces the carrier element (40) of the sensor (10), and
- the snap-action element (80) bears on that side (90) of the carrier device (35) which is averted from the carrier element (40) of the sensor (10), and,

together with the annular stop section (75), establishes an interlocking connection between the housing rear wall (110) of the housing part (70) and the carrier device (35).

**9.** Vehicle safety device according to one of preceding Claims 6-8,
**characterized in that**

- the housing part (70) passes through the plane of the passage opening (30) in the carrier device (35) and has an inner region (150) which is located on that side (90) of the carrier device (35) which is averted from the carrier element (40) of the sensor (10), and
- the inner region (150) of the housing rear wall (110) and the annular stop section (75) are connected by a connecting section (155) which passes through the passage opening (30) in the carrier device (35).

**10.** Vehicle safety device according to one of preceding Claims 6-9,
**characterized in that**

- the housing part (70) has two parallel rail sections (100, 105), and
- the carrier element (40) of the sensor (10) is inserted between the two parallel rail sections (100, 105).

**Revendications**

**1.** Capteur (10) pour déclencher un dispositif de sécurité de véhicule (1),
dans lequel

- le capteur (10) présente un élément de support (40) et une partie de boîtier (70) qui retient l'élément de support (40),

**caractérisé en ce que**

- la partie de boîtier (70) se compose d'un matériau plus tendre que celui de l'élément de support (40),
- la partie de boîtier (70) présente deux portions de rail (100, 105) s'étendant parallèlement, et
- l'élément de support (40) du capteur (10) est enfiché ou enfoncé entre les deux portions de rail s'étendant parallèlement (100, 105) et est retenu par celles-ci.

**2.** Capteur selon la revendication 1,
**caractérisé en ce que**
la partie de boîtier (70) présente une paroi arrière de boîtier (110) et au moins un élément d'encliquetage (80) qui permet un encliquetage de la paroi arrière de boîtier (110) dans une ouverture de passage (30) d'un dispositif de support (35).

**3.** Capteur selon l'une quelconque des revendications précédentes,
**caractérisé en ce que**
la paroi arrière de boîtier (110) de la partie de boîtier (70) présente une portion de butée de forme annulaire (75) qui s'applique, lors d'un montage de la paroi arrière de boîtier (110) contre l'ouverture de passage (30) du dispositif de support (35), sur le côté (85) du dispositif de support (35) tourné vers l'élément de support (40) du capteur (10).

**4.** Capteur selon l'une quelconque des revendications précédentes,
**caractérisé en ce que**
la paroi arrière de boîtier (110) présente une région intérieure (150) qui, après un montage de la paroi arrière de boîtier (110) contre l'ouverture de passage (30) du dispositif de support (35), se trouve du côté (90) du dispositif de support (35) opposé à l'élément de support (40) du capteur (10).

**5.** Capteur selon l'une quelconque des revendications précédentes,
**caractérisé en ce que**

- le capteur présente un corps d'inertie (50) qui peut être dévié par rapport à l'élément de support (40).

**6.** Dispositif de sécurité de véhicule (1) comprenant un capteur (10) selon l'une quelconque des revendications précédentes,
**caractérisé en ce que**

- le dispositif de sécurité de véhicule (1) présente un dispositif de support (35) et un élément de recouvrement (120),
- l'élément de support (40) du capteur (10) est disposé entre le dispositif de support (35) et l'élément de recouvrement (120) et
- l'élément de support (40) du capteur (10) est séparé du dispositif de support (35) et/ou du recouvrement (120) par la partie de boîtier (70) du capteur (10).

7. Dispositif de sécurité de véhicule selon la revendication 6,
**caractérisé en ce que**

- le dispositif de support (35) présente une ouverture de passage (30) et
- la partie de boîtier (70) présente une paroi arrière de boîtier (110) et au moins un élément d'encliquetage (80) qui encliquète la paroi arrière de boîtier (110) dans l'ouverture de passage (30) du dispositif de support (35).

8. Dispositif de sécurité de véhicule selon l'une quelconque des revendications précédentes 6 à 7,
**caractérisé en ce que**

- la paroi arrière de boîtier (110) de la partie de boîtier (70) présente une portion de butée de forme annulaire (75) qui, dans la région de l'ouverture de passage (30) du dispositif de support (35), s'applique sur le côté (85) du dispositif de support (35) tourné vers l'élément de support (40) du capteur (10), et
- l'élément d'encliquetage (80) s'applique du côté (90) du dispositif de support (35) opposé à l'élément de support (40) du capteur (10) et, conjointement avec la portion de butée de forme annulaire (75), réalise une connexion par engagement par correspondance de formes entre la paroi arrière de boîtier (110) de la partie de boîtier (70) et le dispositif de support (35).

9. Dispositif de sécurité de véhicule selon l'une quelconque des revendications précédentes 6 à 8,
**caractérisé en ce que**

- la partie de boîtier (70) traverse le plan de l'ouverture de passage (30) du dispositif de support (35) et présente une région intérieure (150) qui se trouve du côté (90) du dispositif de support (35) opposé à l'élément de support (40) du capteur (10), et
- la région intérieure (150) de la paroi arrière de boîtier (110) et la portion de butée de forme annulaire (75) sont connectées par une portion de connexion (155) traversant l'ouverture de passage (30) du dispositif de support (35).

10. Dispositif de sécurité de véhicule selon l'une quelconque des revendications précédentes 6 à 9,
**caractérisé en ce que**

- la partie de boîtier (70) présente deux portions de rail (100, 105) s'étendant parallèlement et
- l'élément de support (40) du capteur (10) est enfiché entre les deux portions de rail (100, 105) s'étendant parallèlement.

EP 2 780 201 B1

Fig. 1

Fig. 2

Fig. 3

Fig. 4

Fig. 5

Fig. 6

EP 2 780 201 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008049181 A1
- DE 102008008041
- DE 4243101 A1